# EUROPEAN PATENT APPLICATION

(11) **EP 0 740 279 A1**
(43) Date of publication of application: **30.10.1996**
(21) Application number: 96106315.3
(22) Date of filing: 22.04.1996
(51) Int. Cl.: G08G 1/042, G01V 3/08

(54) **Vehicle presence detection system**

(30) Priority: 25.04.1995 GB 9508720; 01.06.1995 GB 9511127
(71) Applicant: POWER MAGNETICS & ELECTRONIC SYSTEMS LIMITED, Rugeley, Staffordshire WS15 1DR (GB)
(72) Inventor: Hall, Keith, Rugeley, Staffordshire WS15 2YE (GB); Whitby, Nicholas Robert, Stoke-on-Trent, Staffordshire ST7 4AU (GB); Marsh, Gary, Walsall, West Midlands WS6 7EZ (GB)
(74) Representative: Lucking, David John

(57) **Abstract**

A vehicle detection system (10) comprises a sensor means (13) comprising first (11) and second (12) sensors spaced apart and located in or adjacent to a highway (17) along which vehicles travel or in or adjacent to a space which a vehicle may occupy, the sensors (11,12) being sensitive to the earth's magnetic field, detection means (14) adapted to receive signals from the first (11) or second (12) sensors and to determine the magnetic gradient between the sensors, and to detect a change in the magnetic gradient of the earth's magnetic field due to the presence of a vehicle in the vicinity of the sensor means (13).

## Description

### Description of the Invention

This invention relates to a vehicle presence detection system and to a method for detecting the presence of a vehicle.

It is a requirement for a vehicle presence detection system for the system to exhibit high sensitivity to a vehicle e.g. travelling in the centre or other optimum position of a carriageway of a highway for example, but be insensitive to a vehicle travelling in an adjacent carriageway in the same or an opposite direction.

It is known to utilise a magnetic sensor embedded in the carriageway. Such a sensor is adapted to measure local distortions in the earth's magnetic field occurring due to a vehicle having a ferrous content passing over or by such a sensor.

Whereas such a sensor is able to detect a vehicle even when the vehicle is not passing directly over the sensor, such a sensor does not provide for good carriageway discrimination, i.e. does not provide good definition of the location of the vehicle relative to the sensor.

It is also known from for example US-A-3911389 to radiate an electromagnetic field which induces eddy currents in a passing metallic body, so that unequal voltages are induced in a pair of receiving coils.

Such sensor means relies on the metallic body essentially completing a magnetic circuit between transmitter and receivers.

According to one aspect of the invention, we provide a vehicle detection system comprising a sensor means comprising first and second sensors spaced apart and located in or adjacent to a highway along which vehicles travel or in or adjacent to a space which a vehicle may occupy, the sensors being sensitive to the earth's magnetic field, detection means adapted to receive signals from the first or second sensors and to determine the magnetic gradient of the earth's magnetic field between the sensors, and to detect a change in the magnetic gradient due to the presence of a vehicle in the vicinity of the sensor means.

Thus the sensor means is a magnetic gradiometer. The requirement for a vehicle presence detection system which is sensitive to a vehicle not travelling in an optimum position on a carriageway or in an optimum position in a parking space for example, but is able to discriminate between a vehicle travelling upon one carriageway and an adjacent carriageway, or a vehicle in one and an adjacent space, can be achieved. It has been found that such a system is able to detect a motorcycle travelling along one carriageway whilst being insensitive to even a large lorry travelling on an adjacent carriageway.

Furthermore, there is no need to radiate a magnetic field, which is undesirable.

The detection means may be calibrated to ignore background magnetic gradient levels due to for example, the presence of a nearby metal structure such as a bridge. The detection means may also be programmed to detect when a vehicle is stationery in the vicinity of the sensor means.

Each sensor may comprise a simple single axis magnetometer although multiple axis magnetometers may be used.

The detection means may sample the output signal from each magnetic sensor in order to determine the magnetic gradient of the earth's magnetic field between the sensors. The signal from the or each sensor will of course change as a vehicle moves into the vicinity of the sensor and the detection means may detect the presence of such vehicle by establishing when the magnetic gradient measured or a change in the magnetic gradient, exceeds a threshold level. The detection means may make reference to an algorithm which determines whether the magnetic gradient measured is transiently passing through zero thus to avoid a break in the indication of presence of a vehicle under conditions such as when a large vehicle passes over the sensor means.

The sensor means is preferably adapted to be positioned below the surface of the highway.

The sensor means may be provided as a sensor means assembly e.g. with a sensor provided at or towards either end of a tube, which may conveniently be mounted generally vertically in the ground. In each case the sensors may be connected to a remote detection means e.g. at the side of the carriageway via cables which are also embedded at least along part of their lengths, in the highway.

Alternatively, the sensors may communicate with the detection means to provide their signals to the detection means via a radio or other wireless link.

According to a second aspect of the invention we provide a method of detecting the presence of a vehicle travelling along or on a highway or in a space which a vehicle may occupy, utilising a vehicle presence detection system according to the first aspect of the invention, the method comprising receiving signals from the first and second sensors in the detection means, determining the magnetic gradient of the earth's magnetic field between the sensors and detecting a change in the magnetic gradient due to the presence of a vehicle in the vicinity of the sensor means.

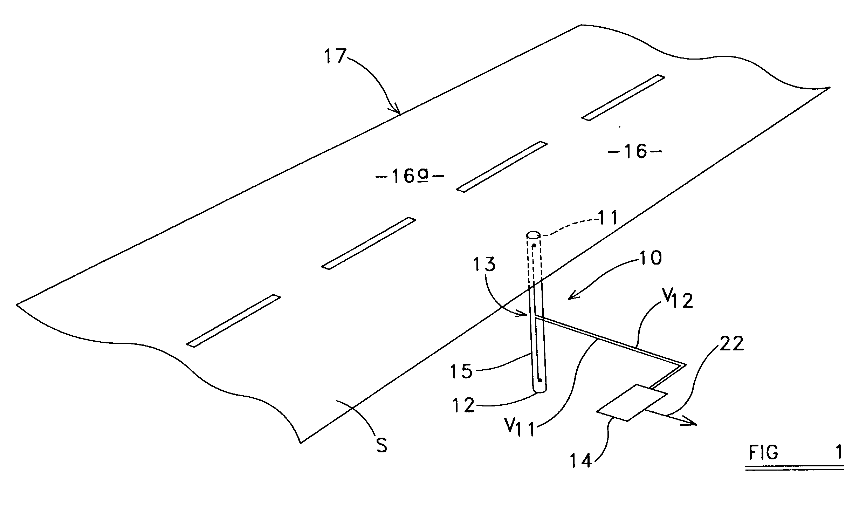

The invention will now be described with reference to the accompanying drawing which is a purely illustrative view of an embodiment of a vehicle detection system in accordance with the invention.

Referring to the drawing there is shown a vehicle presence detection system 10 which comprises a first magnetic sensor 11 and a second magnetic sensor 12 together providing a sensor means 13, and a detection means 14.

In the embodiment shown each sensor 11,12, is contained within a, preferably closed, tube 15 and located towards either end of the tube 15, and the tube 15 is buried below a surface S of a carriageway 16 of a highway 17 in a generally vertical orientation. The first and second sensors 11 and 12 may for example be spaced apart by about six inches and may be buried below the road surface S at a depth (to the top of the tube 15) of up to 600 mm, or at least a depth sufficient to avoid damage due to resurfacing of the highway 17 or other maintenance work.

In this embodiment, each sensor 11, 12, comprises a single axis magnetometer arranged to produce a measure of the earth's magnetic field at the position of the respective sensor 11, 12.

Each of the first and second sensors 11,12, is arranged to produce a respective d.c. output signal V11, V12 indicative of the earth's magnetic field sensed.

In a modified arrangement, each sensor 11, 12 may comprise a multiple axis magnetometer, such as a three axis sensor of the ring core second harmonic fluxgate type, which is arranged to produce a measure of the earth's magnetic field along three orthogonal axes, utilising conventional analogue processing electronics. A suitable analogue processing means is described in prior GB patent 2246888 and such circuitry may be included for each sensor 11,12, within the sensor means 13.

In each case the two signals V11, V12 from the sensor means 13 are fed to the detection means 14 along cables which are buried along at least parts of their lengths below the road surface S although in another embodiment, the magnitude of the signals V11, V12 may be communicated by wireless means such as a radio link, to a remote detection means 14.

The detection means 14 buffers and filters the two input signals V11 and V12 and a difference amplifier within the detection means 14 subtracts one signal from the other to give a measure of the magnetic gradient in the earth's magnetic field between the two sensors 11 and 12.

The detection means 14 may be calibrated to ignore the presence of local large metallic structures, but will determine a change in the earth's magnetic gradient caused for example by a vehicle passing over or at least in the vicinity of the sensor means 13 and locally distorting the earth's magnetic field.

The detection means 14 determines the presence of a vehicle by comparing the earth's magnetic gradient measured with a threshold level and/or determining when the earth's magnetic gradient changes more than a threshold amount.

The detection means 14 may then provide an output 22 to indicate the presence of a vehicle. Such an output 22 may be utilised for statistical purposes i.e. to count the number of vehicles passing the sensor means 13, or for use in controlling traffic signals, or if a sensor means 13 were located for example in a car parking space, to indicate whether that parking space is occupied by a vehicle.

It has been found that an arrangement in accordance with the invention has the ability to give good discrimination between a vehicle travelling along the carriageway 16, and a vehicle travelling in an adjacent carriageway 16a either in the same or in a different direction to the vehicle travelling along the carriageway 16.

Preferably the detection means 14 is adapted to make reference to an algorithm to determine when the earth's magnetic gradient measured transiently passes through zero which would indicate the presence of a large vehicle at sensor means 13, or of a vehicle stationary over the sensor means 13. Thus the detection means 14 may be arranged to avoid a break in the indication of the presence of a vehicle under such conditions so that a vehicle can still be counted whilst the system is not confused.

By virtue of using a magnetic gradiometer comprising the sensor means 13 and detection means 14, to detect the presence of a vehicle, the system is very sensitive to the presence of a vehicle passing directly over the sensor means 13, or at least within a well defined distance to either side of the sensor means 13, whilst the system 10 is largely insensitive to the presence of even a large lorry in a carriageway 16a adjacent to that in which the sensor means 13 is provided.

Preferably, the system 10 is calibrated when initially powered up, but means are provided to enable some adjustment to the system automatically, to allow for changes in the earth's magnetic field occurring locally due to other than the presence of a vehicle passing near the sensor means 13. For example, the system 10 may be re-calibrated at intervals, for example of one minute intervals by adjusting the threshold level which the magnetic gradient must exceed or succeed for the system 10 to provide an output 22 to indicate the presence of a vehicle.

The sensors 11 and 12 may be powered if necessary, from a power source located to the side of or otherwise adjacent to the highway 17. The power source would then be connected to the sensors 11 and 12 by cabling which may again be buried in the surface 51 of the highway 17 along at least part of their lengths.

In another arrangement though, the sensors 11,12, may be powered via an in-road power source such as a device which generates electricity as a vehicle passes over it. One suitable device may comprise piezo electric material which generates electricity in response to stresses imposed upon it. Another such device may generate electricity due to magnetic induction effects caused as a result of a vehicle passing over the device.

In the system 10 shown the sensors 11 and 12 of the sensor means 13 are buried in the road surface S one above the other. In another arrangement, the sensors 11, 12 may be spaced apart longitudinally along the carriageway 16 and may be surface mounted rather than buried in the carriageway 16 or mounted to the side of the carriageway 16. However the buried vertical arrangement is preferred, to give a maximum change in magnetic gradient between the sensors 11, 12 as a vehicle passes over the sensor means 13. Instead of the sensors 11, 12 being arranged in a tube 15 as described, other forms of assembly may be utilised, to house the sensors 11, 12 or the sensors 11, 12 may be in individual housings as required.

The features disclosed in the foregoing description the following claims or the accompanying drawings, expressed in their specific forms or in terms of a means for performing the disclosed function, or a method or process for attaining the disclosed result, or a class or group of substances or compositions, as appropriate, may, separately, or in any combination of such features, be utilised for realising the invention in diverse forms thereof.

## Claims

1. A vehicle detection system (10) comprising a sensor means (15) comprising first (11) and second sensors (12) spaced apart and located in or adjacent to a highway along which vehicles travel or in or adjacent to a space which a vehicle may occupy, the sensors being sensitive to the earth's magnetic field, detection means (14) adapted to receive signals from the first and second sensors (11,12) and to determine the magnetic gradient of the earth's magnetic field between the sensors (11,12), and to detect a change in the magnetic gradient due to the presence of a vehicle in the vicinity of the sensor means (15).

2. A system according to claim 1 characterised in that the system (10) is calibrated to ignore background magnetic gradient levels due to nearby structures.

3. A system according to claim 1 or claim 2 characterised in that the detection means (14) is programmed to detect when a vehicle is stationery in the vicinity of the sensor means (15).

4. A system according to any one of claims 1 to 3 characterised in that each sensor (11,12) comprises a magnetometer.

5. A system according to claim 4 characterised in that each sensor (11,12) comprises a multiple axis magnetometer.

6. A system according to any one of the preceding claims characterised in that the detection means (14) samples the output signal from each magnetic sensor (11,12) in order to determine the magnetic gradient between the sensors (11,12).

7. A system according to any one of the preceding claims characterised in that the detection means (14) detects the presence of a vehicle by establishing when the magnetic gradient measured or a change in the magnetic gradient, exceeds a threshold level.

8. A system according to claim 7 characterised in that the detection means (14) makes reference to an algorithm which determines whether the magnetic gradient measured is transiently passing through zero.

9. A system according to any one of the preceding claims characterised in that the sensor means (15) is adapted to be positioned below the surface of the highway.

10. A system according to claim 9 characterised in that the sensor means (15) is provided as a sensor means assembly with sensors (11,12) provided at or towards either end of a tube (15).

11. A system according to claim 10 characterised in that the sensors (11,12) are connected to a remote detection means (14) via cables which are also embedded at least along part of their lengths, in the highway, or the sensors (11,12) communicate with the detection means (14) to provide their signals to the detection means (14) via a wireless link.

12. A method of detecting the presence of a vehicle travelling along or on a highway or in a space which a vehicle may occupy, utilising a vehicle presence detection system (10) according to any one of the preceding claims, the method comprising receiving signals from the first and second sensors (11,12) in the detection means (14), determining the magnetic gradient of the earth's magnetic field between the sensors (11,12) and detecting a change in the magnetic gradient of the earth's magnetic field due to the presence of a vehicle in the vicinity of the sensor means (15).
